# EUROPÄISCHE PATENTSCHRIFT

(11) **EP 3 462 140 B1**
(45) Veröffentlichungstag und Bekanntmachung des Hinweises auf die Patenterteilung: **24.06.2020**
(21) Anmeldenummer: 18192943.1
(22) Anmeldetag: 06.09.2018
(51) Int. Cl.: G01F 11/28, G01F 15/00

(54) **VERFAHREN UND DOSIERVORRICHTUNG ZUR DOSIERTEN FLUIDAUSGABE**
METHOD AND METERING DEVICE FOR METERED DISPENSING OF FLUID
PROCÉDÉ ET DISPOSITIF DE DOSAGE POUR UNE DISTRIBUTION DE FLUIDE DOSÉE

(30) Priorität: 21.09.2017 DE 102017216713
(43) Veröffentlichungstag der Anmeldung: 03.04.2019
(73) Patentinhaber: Festo SE & Co. KG, 73734 Esslingen (DE)
(72) Erfinder: Wunderlich, Dr. Bengt Erich, 73760 Ostfildern (DE); Vogt, Bernhard, 72076 Tübingen (DE); Vu, Duc-Thang, 73728 Esslingen (DE)
(74) Vertreter: Patentanwälte Magenbauer & Kollegen Partnerschaft mbB

(56) Entgegenhaltungen:
- EP-A2- 0 219 102
- DE-A1- 2 534 260
- DE-A1- 10 103 361
- US-A- 5 713 486

## Beschreibung

Die Erfindung betrifft ein Verfahren zur dosierten Ausgabe eines Fluides an einer Ausgabeöffnung eines Dosierkanals einer Dosiervorrichtung mit den in der Präambel des Anspruchs 1 spezifizierten Verfahrensschritten.

Ferner betrifft die Erfindung eine Dosiervorrichtung zur dosierten Ausgabe eines Fluides, mit einem Dosierkanal für das zu dosierende Fluid, der mit einer Ausgabeöffnung verbunden ist, und mit einer Pumpe zum Zuführen von Fluid in den Dosierkanal.

Eine derartige Dosiervorrichtung, mit der ein Verfahren der vorgenannten Art ausführbar ist, geht aus der EP 0 219 102 A2 hervor. In diesem bekannten Fall ist eine Ansaugöffnung über einen Dosierkanal mit einer Pumpe verbunden, wobei ein durch die Pumpe angesaugtes Fluid anschließend unter Mitwirkung von Druckluft durch die Ansaugöffnung hindurch wieder dosiert ausgegeben werden kann.

Eine Dosiervorrichtung, die aus der US 7,303,728 B2 bekannt ist, verfügt über einen teilweise aus einer Rohrleitung bestehenden Dosierkanal, der einerseits mit einem Fluidreservoir verbunden ist und andererseits mit einer an einer Dosiernadel ausgebildeten Ausgabeöffnung endet. Das Fluidreservoir ist teilweise mit einem Übertragungsfluid gefüllt und kann mittels einer durch eine elektronische Steuereinrichtung ansteuerbare Pumpe wahlweise mit Überdruck oder Unterdruck beaufschlagt werden. Mit Hilfe der Dosiervorrichtung lässt sich ein Fluid zwischen zwei Behältnissen übertragen. Hierzu wird der Dosierkanal mittels eines durch die Pumpe erzeugten Überdruckes mit dem Übertragungsfluid gefüllt und anschließend die Dosiernadel in das erste Behältnis eingeführt. Durch anschließendes Umschalten der Pumpe in einen Saugbetrieb wird in dem ersten Behältnis befindliches Fluid in die Dosiernadel angesaugt und darin festgehalten. Anschließend wird die Dosiernadel in das zweite Behältnis eingeführt und das zuvor angesaugte Fluid in dieses zweite Behältnis abgegeben, indem die Pumpe in einen Überdruckbetrieb umgeschaltet wird. Das Ansaugen des Fluides in das erste Behältnis ist durch ein Dosierventil steuerbar, das in den Dosierkanal eingeschaltet ist. Ist die gewünschte Fluidmenge angesaugt, wird das Dosierventil geschlossen. Zur Abgabe des angesaugten Fluides in das zweite Behältnis kann das Dosierventil geöffnet werden.

Aus der DE 10 2016 200 960 A1 ist eine Pumpvorrichtung bekannt, die über ein Kanalmodul verfügt, in dem ein Fluidkanalsystem ausgebildet ist, das einerseits mit einer Ansauglanze in ein Fluidreservoir hineinragt und andererseits über eine Ausgabeöffnung verfügt. In das Fluidkanalsystem ist eine Pumpe eingeschaltet, die in der Lage ist, in dem Fluidreservoir enthaltenes Fluid anzusaugen und an der Ausgabeöffnung auszugeben.

Der Erfindung liegt die Aufgabe zugrunde, Maßnahmen zu treffen, die eine dosierte Ausgabe selbst kleiner Mengen von Fluid mit hoher Genauigkeit und Wiederholgenauigkeit ermöglichen.

Zur Lösung dieser Aufgabe ist erfindungsgemäß ein Verfahren zur dosierten Ausgabe eines Fluides an einer Ausgabeöffnung eines Dosierkanals einer Dosiervorrichtung vorgesehen, das sich zusätzlich zu den eingangs genannten Verfahrensschritten durch die Merkmale des kennzeichnenden Teils des Anspruchs 1 auszeichnet.

Auf diese Weise wird das zu dosierende Fluid in einem mehrphasigen Verfahrensablauf ausgegeben, wobei eine erste Dosierphase mittels einer Pumpe und eine sich daran anschließende zweite Dosierphase ohne Mitwirkung der Pumpe allein durch eine Druckbeaufschlagung mittels Druckluft durchgeführt wird. In der Kombination dieser beiden Dosierphasen, die man als Pumpen-Dosierphase und als Druckluft-Dosierphase bezeichnen kann, liegt der Vorteil, dass man sowohl größere als auch sehr geringe Fluidmengen äußerst exakt und mit sehr hoher Wiederholgenauigkeit dosieren kann. Während der Pumpen-Dosierphase wird mittels der dabei aktiven Pumpe aus einem Fluidreservoir, das nicht unter Druck zu stehen braucht, zu dosierendes Fluid über eine Zuführöffnung in den Dosierkanal angesaugt und an der Ausgabeöffnung in ein dort beispielsweise bereitgestelltes Behältnis ausgegeben. Dies kann mit hoher Förderleistung der Pumpe und somit äußerst zeitsparend stattfinden, wobei man zweckmäßigerweise einen Großteil der auszugebenden Soll-Fluidmenge ausgibt. Bevorzugt werden 80% bis 99,9%, das heißt bis nahezu 100% der Soll-Fluidmenge in der Pumpen-Dosierphase ausgegeben, insbesondere 90% der Soll-Fluidmenge.

Bevor die Soll-Fluidmenge ausgegeben ist, wird ein sowohl von der Pumpe als auch von der Ausgabeöffnung abgetrennter Kanalabschnitt des Dosierkanals, der als Puffer-Kanalabschnitt bezeichnet sei, durch Einspeisung von Druckluft unter Überdruck gesetzt, sodass das in dem Puffer-Kanalabschnitt eingesperrte Fluid-Puffervolumen unabhängig von der Pumpe unter Überdruck steht. Hieran anschließend werden durch eine getaktete Betätigung eines zwischen den Puffer-Kanalabschnitt und die Ausgabeöffnung in den Dosierkanal eingeschalteten Dosierventils kleinere Fluidmengen impulsweise an der Ausgabeöffnung ausgestoßen, bis die gewünschte Soll-Fluidmenge ausgegeben ist. Das Dosierventil wird dabei abwechselnd zwischen einer den Fluiddurchtritt ermöglichenden Offenstellung und einer den Fluiddurchtritt verhindernden Schließstellung umgeschaltet. Die an der Ausgabeöffnung tatsächlich ausgegebene Ist-Fluidmenge wird erfasst und mit der zu dosierenden Soll-Fluidmenge verglichen, wobei die getaktete Betätigung des Dosierventils so lange erfolgt, bis die erfasste Ist-Fluidmenge der Soll-Fluidmenge entspricht. Die Ist-Fluidmenge kann beispielsweise durch eine Waage oder mittels eines Durchflusssensors bestimmt werden. Da der Puffer-Kanalabschnitt unter Überdruck steht, werden die einzelnen Fluidmengen insbesondere tropfenweise quasi hinausgeschossen. Der während der Druckluft-Dosierphase ausgegebene Restanteil der Soll-Fluidmenge ist maximal so groß und bevorzugt zumindest geringfügig kleiner ist als das in den Puffer-Kanalabschnitt nach Beendigung der Pumpen-Dosierphase eingesperrte Fluid-Puffervolumen. Durch das erfindungsgemäße Verfahren lassen sich Fluide, ob flüssig oder auch gasförmig, sehr schnell und mit höchster Präzision dosieren, was vielfältige Anwendungsgebiete für das Verfahren eröffnet, beispielsweise in der Medizintechnik beziehungsweise Labortechnik.

Vorteilhafte Ausgestaltungen des erfindungsgemäßen Verfahrens sind in den Unteransprüchen aufgeführt.

Wie schon angedeutet, wird durch den Betrieb der Pumpe während der Pumpen-Dosierphase zweckmäßigerweise bereits ein Großteil der Soll-Fluidmenge ausgegeben, sodass mittels der Druckluft-Dosierphase, während der die Ausgaberate zwecks hoher Präzision sehr gering ist, nur noch ein kleiner Restanteil an Fluid auszugeben ist. Vorzugsweise werden 80% bis 99,9% und insbesondere im Bereich von 90% der Soll-Fluidmenge während der Pumpen-Dosierphase durch die dabei fördernde Pumpe ausgegeben.

Bei der getakteten Fluidausgabe während der Druckluft-Dosierphase ist es vorteilhaft, wenn die Öffnungszeitdauern der aufeinanderfolgenden Offenstellungen des Dosierventils allmählich verringert werden. Dies ermöglicht eine äußerst feine Dosierung. Bevorzugt wird bei der getakteten Betätigung des Dosierventils eine erste Offenstellung eingestellt, deren Öffnungszeitdauer länger ist als die Öffnungszeitdauer jeder nachfolgenden Offenstellung, wobei die erste Offenstellung zweckmäßigerweise so eingestellt wird, dass während dieser ersten Offenstellung 50% bis 95% und insbesondere zumindest in etwa 90% des restlichen Anteils der zu dosierenden Soll-Fluidmenge ausgegeben werden.

Zwischen den aufeinanderfolgenden Offenstellungen ist zweckmäßigerweise jeweils eine etwas längere Ausgabepause vorgesehen. Hierzu wird die Schließzeitdauer jeder Schließstellung des Dosierventils länger gewählt als die Öffnungszeitdauer jeder Offenstellung oder zumindest jeder auf die erste Offenstellung folgenden Offenstellung. Die längere Schließzeitdauer begünstigt die Präzision des Dosiervorganges insbesondere dann, wenn die Soll-Fluidmenge wiegetechnisch erfasst wird, weil das ausgegebene Fluid genug Zeit hat, sich zu beruhigen und dadurch für eine hohe Wiegegenauigkeit zu sorgen.

Wie schon erwähnt, ist es vorteilhaft, wenn der Puffer-Kanalabschnitt so ausgebildet wird, dass das in ihm maximal aufnehmbare Fluid-Puffervolumen zumindest im Wesentlichen dem getaktet auszugebenden restlichen Anteil der zu dosierenden Soll-Fluidmenge entspricht, wobei es nicht geringer ist als der getaktet auszugebende restliche Anteil der zu dosierenden Soll-Fluidmenge. Dadurch kann vorteilhaft erreicht werden, dass der Puffer-Kanalabschnitt nach der Beendigung eines Dosiervorganges zumindest im Wesentlichen entleert ist.

Bevorzugt wird das Verfahren mittels einer Dosiervorrichtung durchgeführt, die ein im Verlauf des Dosierkanals zwischen der Pumpe und dem Dosierventil angeordnetes Auswahlventil aufweist, das einen an eine Druckluftquelle angeschlossenen Drucklufteinlass aufweist und wahlweise in einer Pumpen-Betriebsstellung oder in eine Druckluft-Betriebsstellung schaltbar ist, wobei es einen zwischen dem Auswahlventil und der Ausgabeöffnung verlaufenden Ausgabe-Kanalabschnitt des Dosierkanals in der Pumpen-Betriebsstellung mit der Pumpe und in der Druckluft-Betriebsstellung mit dem Drucklufteingang verbindet. Mit einer solchen Dosiervorrichtung werden insbesondere die nachstehenden Verfahrensschritte durchgeführt:
(a) Betreiben der Dosiervorrichtung in einer Pumpen-Dosierphase, in der das Auswahlventil bei laufender Pumpe und bei gleichzeitig in der Offenstellung befindlichem Dosierventil in der Pumpen-Betriebsstellung gehalten wird, bis an der Ausgabeöffnung der erste Anteil der zu dosierenden Soll-Fluidmenge des über die Zuführöffnung angesaugten Fluides ausgegeben ist,
(b) anschließendes Betreiben der Dosiervorrichtung in einer Druckluft-Dosierphase, wobei während einer ersten Teilphase der Druckluft-Dosierphase durch Umschalten des Auswahlventils in die Druckluft-Betriebsstellung und durch Umschalten des Dosierventils in die Schließstellung der während der Pumpen-Dosierphase durch die Pumpe mit Fluid gefüllte Puffer-Kanalabschnitt des Dosierkanals durch Einspeisung von Druckluft unter Druck gesetzt wird und wobei während einer sich daran anschließenden zweiten Teilphase der Druckluft-Dosierphase das Dosierventil getaktet zwischen der Offenstellung und der Schließstellung umgeschaltet wird, bis an der Ausgabeöffnung der restliche Anteil der zu dosierenden Soll-Fluidmenge aus dem Puffer-Kanalabschnitt ausgegeben ist.

Zur Lösung der weiter oben genannten Aufgabe ist erfindungsgemäß eine Dosiervorrichtung der eingangs genannten Art gemäß dem kennzeichnenden Teil des Anspruchs 6 ausgebildet.

Mit einer solchen Dosiervorrichtung lässt sich das weiter oben beschriebene Verfahren vorteilhaft durchführen.

Die Dosiervorrichtung ist mit einer elektronischen Steuereinrichtung ausgestattet, die zumindest an das Auswahlventil und an das Dosierventil angeschlossen ist und durch die das Auswahlventil und das Dosierventil derart ansteuerbar sind, dass
(a) während einer Pumpen-Dosierphase der Dosiervorrichtung bei aktiver Pumpe und gleichzeitig in der Offenstellung befindlichem Dosierventil das Auswahlventil in der Pumpen-Betriebsstellung gehalten ist, bis an der Ausgabeöffnung ein erster Anteil einer zu dosierenden Soll-Fluidmenge eines durch die Pumpe über die Zuführöffnung angesaugten Fluides ausgegeben ist, und
(b) im Anschluss an die Pumpen-Dosierphase eine Druckluft-Dosierphase der Dosiervorrichtung hervorgerufen wird, in der während einer ersten Teilphase durch Umschalten des Auswahlventils in die Druckluft-Betriebsstellung und durch Umschalten des Dosierventils in die Schließstellung ein zwischen dem Auswahlventil und dem Dosierventil befindlicher, während der Pumpen-Dosierphase durch die Pumpe mit Fluid gefüllter Puffer-Kanalabschnitt des Dosierkanals durch Einspeisung von Druckluft unabhängig von der Pumpe unter Druck gesetzt wird und in der während einer anschließenden zweiten Teilphase das Dosierventil getaktet zwischen der Offenstellung und der Schließstellung umgeschaltet wird, bis an der Ausgabeöffnung der restliche Anteil der zu dosierenden Soll-Fluidmenge aus dem Puffer-Kanalabschnitt ausgegeben ist.

Das Auswahlventil und das Dosierventil lassen sich besonders vorteilhaft ansteuern, da die Dosiervorrichtung mit einer Fluidmengen-Erfassungseinrichtung ausgestattet ist, die in der Lage ist, die an der Ausgabeöffnung tatsächlich ausgegebene Ist-Fluidmenge zu erfassen. Diese Fluidmengen-Erfassungseinrichtung ist ebenfalls an die elektronische Steuereinrichtung angeschlossen und in der Lage, dieser elektronischen Steuereinrichtung die Informationen hinsichtlich der aktuellen Ist-Fluidmenge zuzuführen.

Auf der Grundlage der Soll-Fluidmenge und der durch die Fluidmengen-Erfassungseinrichtung bereitgestellten Informationen über die Ist-Fluidmenge ist die elektronische Steuereinrichtung in der Lage, das Auswahlventil und das Dosierventil derart aufeinander abgestimmt anzusteuern, dass entweder die Pumpen-Dosierphase oder die Druckluft-Dosierphase möglich ist. Vorteilhaft ist es in diesem Zusammenhang, dass auch die Pumpe an die elektronische Steuereinrichtung angeschlossen und durch die elektronische Steuereinrichtung betriebsmäßig ansteuerbar ist. Dies erlaubt es insbesondere, die Pumpe während der Druckluft-Dosierphase zu deaktivieren, um den Energieverbrauch zu minimieren.

Vorteilhafte Ausgestaltungen der erfindungsgemäßen Dosiervorrichtung sind ebenfalls in den Unteransprüchen aufgeführt.

Die Dosiervorrichtung enthält zweckmäßigerweise ein mit dem zu dosierenden Fluid befüllbares oder befülltes Fluidreservoir, an das der Dosierkanal mit der Zuführöffnung angeschlossen ist. Ein Vorteil der Dosiervorrichtung besteht darin, dass aufgrund der vorhandenen Pumpe eine Druckbeaufschlagung des Fluidreservoirs nicht erforderlich ist, um den Dosierkanal mit dem zu dosierenden Fluid zu befüllen. Die Befüllung des Dosierkanals einschließlich des Puffer-Kanalabschnittes erfolgt in der Pumpen-Dosierphase durch die dann aktive, eine Ansaugwirkung entfaltende Pumpe. Dadurch ergibt sich ein sehr breites Einsatzspektrum für die Dosiervorrichtung, da auch Fluide dosiert werden können, die in nicht unter Überdruck stehenden Fluidreservoiren bereitgestellt sind.

Die elektronische Steuereinrichtung ist zweckmäßigerweise mit elektronischen Vergleichermitteln ausgestattet, durch die ein Vergleich der empfangenen Informationen über die Ist-Fluidmenge mit der Soll-Fluidmenge möglich ist. Die elektronische Steuereinrichtung ist insbesondere dahingehend ausgebildet, dass sie die getaktete Betätigung des Dosierventils beendet und das Dosierventil in seiner Schließstellung hält, wenn die erfasste Ist-Fluidmenge der Soll-Fluidmenge entspricht. Dann ist die Druckluft-Dosierphase abgeschlossen und es kann sich ein neuerlicher Dosiervorgang anschließen, der wiederum mit einer Pumpen-Dosierphase beginnt.

Sowohl das Auswahlventil als auch das Dosierventil ist zweckmäßigerweise ein elektrisch betätigbares Mehrwegeventil. Vorzugsweise handelt es sich jeweils um ein Magnetventil oder um ein piezoelektrisch betätigbares Ventil. Das Auswahlventil ist insbesondere ein 3/2-Wegeventil, während das Dosierventil insbesondere ein 2/2-Wegeventil ist.

Die für die Benutzung der Dosiervorrichtung erforderlichen Kanäle können ohne weiteres ausschließlich durch Schläuche und/oder Rohrleitungen gebildet werden. Als besonders zweckmäßig wird es jedoch angesehen, wenn zumindest ein Längenabschnitt des Dosierkanals, insbesondere einschließlich des Puffer-Kanalabschnittes, in einem Kanalkörper ausgebildet ist, der gleichzeitig als Träger für die Pumpe, das Auswahlventil und das Dosierventil fungiert. Auf diese Weise lassen sich besonders kurze Strömungswege verwirklichen. Eine die Ausgabeöffnung aufweisende Dosiernadel ist zweckmäßigerweise an dem Kanalkörper befestigt. Der Kanalkörper enthält zweckmäßigerweise zwei plattenförmige Körperteile, die in einer Fügeebene aneinander angesetzt sind, wobei mindestens eines der Körperteile im Bereich der Fügeebene über eine Nutstruktur verfügt, durch deren Abdeckung seitens des anderen Körperteils der betreffende Längenabschnitt des Dosierkanals gebildet ist.

Ist der Puffer-Kanalabschnitt zumindest partiell mit einem mäanderförmigen Längsverlauf versehen, lässt sich ein beliebig großes Puffervolumen auf engstem Raum realisieren. Alternativ kann der Puffer-Kanalabschnitt auch eine einen im Vergleich zu benachbarten Kanalabschnitten vergrößerten Durchmesser aufweisende Pufferkammer enthalten.

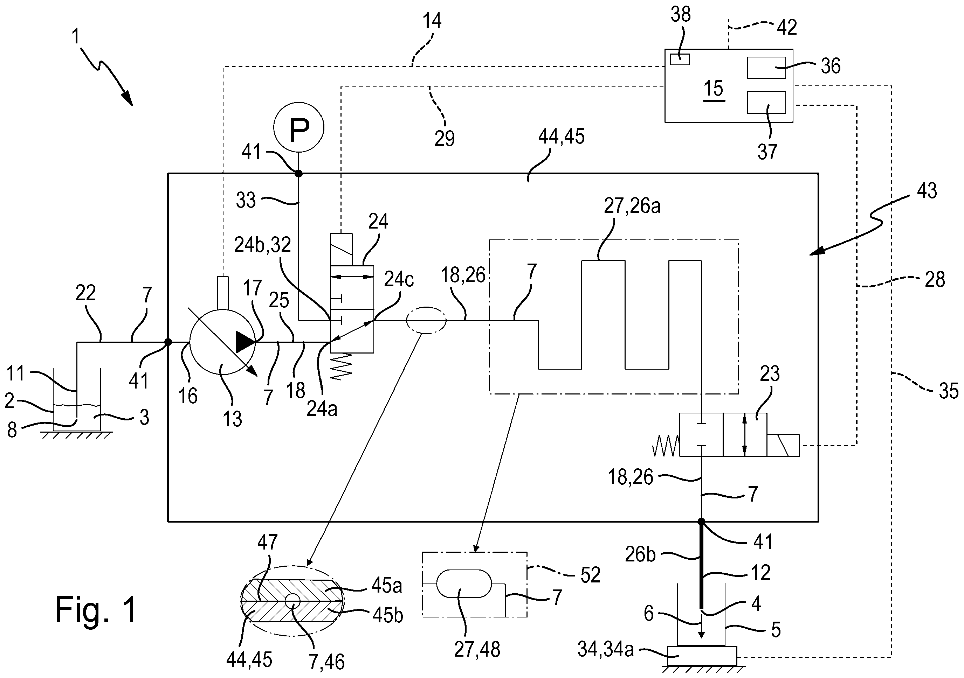

Nachfolgend wird die Erfindung anhand der beiliegenden Zeichnung näher erläutert. Die einzige Figur (Figur 1) illustriert in schematischer Darstellung einen bevorzugten Aufbau der erfindungsgemäßen Dosiervorrichtung, die geeignet ist, um eine besonders vorteilhafte Variante des erfindungsgemäßen Dosierverfahrens durchzuführen.

Die in ihrer Gesamtheit mit Bezugsziffer 1 bezeichnete Dosiervorrichtung ist dafür ausgebildet, eine als Soll-Fluidmenge bezeichnete vorbestimmte Menge an Fluid auszugeben, um sie einer weiteren Verwendung zuzuführen, beispielsweise im Laborbereich in der Medizintechnik. Die auszugebene Fluidmenge sei im Folgenden auch als Fluidprobe bezeichnet. Bei der Fluidprobe handelt es sich um eine Teilmenge eines in einer größeren Menge in einem Fluidreservoir 2 bereitgestellten Fluides 3, bei dem es sich vorzugsweise um eine Flüssigkeit, insbesondere um eine wässrige Flüssigkeit handelt, die aber auch gasförmig vorliegen kann.

Die Dosiervorrichtung 1 ist dafür ausgebildet, in einer gewissen Abfolge zeitlich nacheinander mehrere Fluidproben auszugeben, wobei die Ausgabe durch eine Ausgabeöffnung 4 der Dosiervorrichtung 1 hindurch stattfindet. Die dosierte Ausgabe des Fluides 3 erfolgt insbesondere in ein geeignetes Aufnahmebehältnis 5 hinein, bei dem es sich beispielsweise um ein Gefäß oder um eine Aufnahmekammer einer Mikrotiterplatte handelt.

In der Zeichnung ist bei 6 durch einen Pfeil ein durch die Ausgabeöffnung 4 hindurch stattfindender Fluidausgabevorgang angedeutet.

Die dosierte Fluidausgabe erfolgt durch einen Dosierkanal 7 der Dosiervorrichtung 1 hindurch. Der Dosierkanal 7 hat eingangsseitig eine Zuführöffnung 8, durch die hindurch das zu dosierende Fluid 3 aus dem Fluidreservoir 2 in den Dosierkanal 7 zugeführt wird. Exemplarisch ist die Zuführöffnung 8 Bestandteil einer Ansaugnadel 11, die in das in dem Fluidreservoir 2 bereitgestellte Ausgangsvolumen an Fluid 3 eintaucht. Ausgangsseitig endet der Dosierkanal 7 mit der schon erwähnten Ausgabeöffnung 4, die vorzugsweise Bestandteil einer Dosiernadel 12 ist. Zur Ausgabe der Fluidprobe ist die Dosiernadel 12 mit ihrer Ausgabeöffnung 4 oberhalb oder auch zum Teil innerhalb des Aufnahmebehältnisses 5 positioniert.

Die Dosiervorrichtung 1 umfasst eine in den Verlauf des Dosierkanals 7 eingeschaltete Pumpe 13. Die Pumpe 13 ist elektrisch betätigbar und kann ihren Betriebszustand steuernde elektrische Steuersignale über eine erste Steuerleitung 14 von einer elektronischen Steuereinrichtung 15 erhalten, die zweckmäßigerweise ebenfalls ein Bestandteil der Dosiervorrichtung 1 ist.

Bei der Pumpe 13 handelt es sich vorzugsweise um eine Membranpumpe. Als Betätigungseinrichtung verfügt sie beispielsweise über eine Piezoaktuatoreinrichtung.

Die Pumpe 13 hat einen mit der Zuführöffnung 8 fluidisch verbundenen Pumpeneingang 16 und einen mit der Ausgabeöffnung 4 verbundenen Pumpenausgang 17. Im aktivierten Zustand befindet sich die Pumpe 13 in einem Förderbetrieb und saugt über die Zuführöffnung 8 Fluid 3 aus dem Fluidreservoir 2 an. Das von der Pumpe 13 angesaugte Fluid 3 gelangt über den Pumpenausgang 17 in einen sich daran anschließenden Ausgangs-Kanalabschnitt 18 des Dosierkanals 7, wobei sich dieser Ausgangs-Kanalabschnitt 18 von dem Pumpenausgang 17 bis zu der Ausgabeöffnung 4 erstreckt. Exemplarisch verläuft der der Pumpe 13 entgegengesetzte Endabschnitt des Ausgangs-Kanalabschnitts 18 durch die Dosiernadel 12 hindurch.

Die Fluidverbindung zwischen dem Pumpeneingang 16 und der Zuführöffnung 8 erfolgt durch einen Ansaug-Kanalabschnitt 22 des Dosierkanals 7 hindurch, der sich exemplarisch zumindest partiell durch die Ansaugnadel 11 hindurch erstreckt.

Die Pumpe 13 kann durch die elektronische Steuereinrichtung 15 wahlweise in einen nicht Fluid fördernden, deaktivierten Betriebszustand oder in einen Fluid ansaugenden und fördernden aktivierten bzw. aktiven Betriebszustand versetzt werden. Bevorzugt ist die Pumpe 13 von einer Bauart, die eine variable Einstellung der im aktivierten Betriebszustand vorliegenden Förderleistung ermöglicht.

In den Verlauf des Dosierkanals 7, genauer gesagt in den Verlauf des Ausgangs-Kanalabschnittes 18, sind zwei bevorzugt elektrisch betätigbare Ventile eingeschaltet, die in der Kanalverlaufsrichtung mit Abstand zueinander angeordnet sind. Bei diesen Ventilen handelt es sich zum einen um ein Dosierventil 23 und zum anderen um ein Auswahlventil 24. Das Auswahlventil 24 sitzt näher bei der Pumpe 13 als das Dosierventil 23. Das Dosierventil 23 ist zwischen dem Auswahlventil 24 und der Ausgabeöffnung 4 in den Ausgangs-Kanalabschnitt 18 eingeschaltet.

Das Auswahlventil 24 unterteilt den Ausgangs-Kanalabschnitt 18 in einen zu dem Pumpenausgang 17 führenden Übergangs-Kanalabschnitt 25 und einen zu der Ausgabeöffnung 4 führenden Ausgabe-Kanalabschnitt 26. Das Dosierventil 23 sitzt im Verlauf des Ausgabe-Kanalabschnittes 26 und unterteilt selbigen in einen zwischen dem Auswahlventil 24 und dem Dosierventil 23 verlaufenden ersten Teilabschnitt 26a und einen zwischen dem Dosierventil 23 und der Ausgabeöffnung 4 verlaufenden zweiten Teilabschnitt 26b. Aufgrund seiner besonderen Funktion und zur besseren Unterscheidung wird der erste Teilabschnitt 26a als Puffer-Kanalabschnitt 27 bezeichnet.

Der Übergangs-Kanalabschnitt 25 kann entfallen, wenn das Auswahlventil 24 direkt an den Pumpenausgang 17 angebaut ist.

Die beiden Ventile 23, 24, die insbesondere als Magnetventile ausgebildet sind, sind unabhängig voneinander durch die elektronische Steuereinrichtung 15 ansteuerbar, um die jeweils gewünschte Schaltstellung vorzugeben. Das Dosierventil 23 ist hierzu über eine zweite Steuerleitung 28 und das Auswahlventil 24 über eine dritte Steuerleitung 29 steuerungstechnisch an die elektronische Steuereinrichtung 15 angeschlossen.

Bei dem Dosierventil 23 handelt es sich insbesondere um ein Zweistellungsventil, das alternativ in eine aus der Zeichnung ersichtliche Schließstellung und eine hiervon abweichende Offenstellung schaltbar ist. In der Schließstellung ist der mit der Ausgabeöffnung 4 kommunizierende zweite Teilabschnitt 26b des Ausgabe-Kanalabschnittes 26 mit dem Puffer-Kanalabschnitt 27 fluidisch verbunden, in der Schließstellung ist er von diesem Puffer-Kanalabschnitt 27 abgetrennt, wobei der Puffer-Kanalabschnitt 27 gleichzeitig fluiddicht abgesperrt ist.

Bevorzugt handelt es sich bei dem Dosierventil um ein elektrisch betätigbares 2/2-Wegeventil.

Das Dosierventil 23 ist insbesondere als ein Schnellschaltventil ausgebildet, sodass die Möglichkeit besteht, es mit einer hohen Taktrate zwischen der Offenstellung und der Schließstellung umzuschalten. Jede Schaltstellung kann durch entsprechende Beeinflussung durch die elektronische Steuereinrichtung 15 beliebig lange beibehalten werden.

Bei dem Auswahlventil 24 handelt es sich vorzugsweise auch um ein Zweistellungsventil, das allerdings als Dreiwegeventil ausgebildet ist. Vorzugsweise handelt es sich bei ihm um ein elektrisch betätigbares 3/2-Wegeventil.

Das Auswahlventil 24 hat einen mit dem Pumpenausgang 17 verbundenen ersten Ventileingang 24a, einen in seiner Funktion noch zu erläuternden zweiten Ventileingang 24b und einen Ventilausgang 24c, an den das dem Dosierventil 23 entgegengesetzte Ende des Puffer-Kanalabschnittes 27 angeschlossen ist.

Der zweite Ventileingang 24b repräsentiert einen Drucklufteinlass 32, der im Betrieb der Dosiervorrichtung 1 an eine Druckluftquelle P angeschlossen ist. Exemplarisch verfügt die Dosiervorrichtung 1 über einen Druckluft-Versorgungskanal 33, der mit dem Drucklufteinlass 32 verbunden ist und zu der Druckluftquelle P führt. Durch die Druckluftquelle P wird unter einem Überdruck stehende Druckluft bereitgestellt, die an dem Drucklufteinlass 32 ansteht. Vorzugsweise weist die Druckluftquelle P einen nicht weiter abgebildeten Druckregler auf, der für die Bereitstellung eines konstanten Fluiddruckes sorgt.

Das Auswahlventil 24 kann alternativ in zwei Betriebsstellungen geschaltet und gehalten werden. Eine aus der Zeichnung ersichtliche erste Betriebsstellung sei zur besseren Unterscheidung als Pumpen-Betriebsstellung bezeichnet, die mögliche zweite Betriebsstellung als Druckluft-Betriebsstellung.

In der Pumpen-Betriebsstellung verbindet das Auswahlventil 24 den Pumpenausgang 17 mit dem Puffer-Kanalabschnitt 27, während gleichzeitig die Druckluftquelle P abgetrennt ist. In der Druckluft-Betriebsstellung ist der Puffer-Kanalabschnitt 27 mit der Druckluftquelle P verbunden und gleichzeitig von der Pumpe 13 abgetrennt.

Ist die Pumpe während der Pumpen-Betriebsstellung des Auswahlventils 24 aktiviert, fördert sie Fluid 3, das sie aus dem Fluidreservoir 2 ansaugt, in den Dosierkanal 7 hinein und durch das Auswahlventil 24 hindurch in den Ausgabe-Kanalabschnitt 26. In der Druckluft-Betriebsstellung wird Druckluft aus der Druckluftquelle P durch das Auswahlventil 24 hindurch in den Ausgabe-Kanalabschnitt 26 eingespeist und dieser Ausgabe-Kanalabschnitt 26 unter einen Überdruck gesetzt, der dem Druck der Druckluftquelle P entspricht.

Derjenige Anteil von Fluid 3, der durch die aktivierte Pumpe 13 in den Puffer-Kanalabschnitt 27 des Ausgabe-Kanalabschnittes 26 eingespeist ist, sei im Folgenden zur besseren Unterscheidung als Fluid-Puffervolumen bezeichnet. Die Menge des Fluid-Puffervolumens hängt von der Größe des Hohlraumes ab, der durch den Puffer-Kanalabschnitt 27 begrenzt ist. Wird das Auswahlventil 24 zu einem Zeitpunkt in die Druckluft-Betriebsstellung geschaltet, zu dem das Dosierventil die Schließstellung einnimmt, wird das in dem Puffer-Kanalabschnitt 27 eingesperrte Fluid-Puffervolumen unter den Überdruck gesetzt, der durch die Druckluftquelle P angelegt ist.

Als ein weiteres bevorzugtes Ausstattungsmerkmal verfügt die Dosiervorrichtung 1 über eine Fluidmengen-Erfassungseinrichtung 34, durch die die an der Ausgabeöffnung 4 durch den Fluid-Ausgabevorgang 6 tatsächlich ausgegebene Ist-Fluidmenge erfassbar ist, vorzugsweise in einem kontinuierlichen Erfassungsvorgang. Die Fluidmengen-Erfassungseinrichtung 34 ist in der Lage, elektrische Informationen hinsichtlich der erfassten Ist-Fluidmenge zu generieren, die über eine beim Ausführungsbeispiel vierte Steuerleitung 35 an die elektronische Steuereinrichtung 15 übermittelt werden, an die die Fluidmengen-Erfassungseinrichtung 34 angeschlossen ist.

Die elektronische Steuereinrichtung 15 enthält elektronische Vergleichermittel 36, die ausgebildet sind, um die durch die Fluidmengen-Erfassungseinrichtung 34 ermittelte Ist-Fluidmenge mit der für die auszugebende Fluidprobe angestrebten Soll-Fluidmenge zu vergleichen. Zweckmäßigerweise ist die elektronische Steuereinrichtung 15 mit elektronischen Speichermitteln 37 ausgestattet, in denen die Soll-Fluidmenge zur Nutzung durch die Vergleichermittel 36 abgespeichert ist. Bevorzugt ist die elektronische Steuereinrichtung 15 auch mit Eingabemitteln 38 ausgestattet, die eine variable Eingabe der jeweils gewünschten Soll-Fluidmenge ermöglichen. Weiter bevorzugt ist die elektronische Steuereinrichtung 15 mit einer Kommunikationsschnittstelle 42 ausgestattet, über die sie mit einer übergeordneten elektronischen Steuereinheit kommunizieren kann und die beispielsweise auch die Funktion der Eingabemittel 38 übernehmen kann.

In vorteilhafter Weise ist die Fluidmengen-Erfassungseinrichtung 34 als eine Waage 34a ausgebildet. Dies ist bei dem illustrierten Ausführungsbeispiel der Fall. Die Waage 34a trägt im Betrieb der Dosiervorrichtung 1 das Aufnahmebehältnis 5 und kann durch einen bevorzugt kontinuierlichen Wiegevorgang die in das Aufnahmebehältnis 5 ausgegebene Ist-Fluidmenge gewichtsmäßig erfassen und diesbezügliche Informationen an die elektronische Steuereinrichtung 15 übermitteln.

Gemäß einem nicht illustrierten Ausführungsbeispiel ist die Fluidmengen-Erfassungseinrichtung 34 von einer Durchfluss-Sensoreinrichtung gebildet, die in der Lage ist, die ausgegebene Ist-Fluidmenge über die erfasste Durchflussrate an Fluid zu ermitteln.

Bevorzugt sind zahlreiche Komponenten der Dosiervorrichtung 1 platzsparend, kompakt und leicht handhabbar in einer Dosiereinheit 43 zusammengefasst. Diese Dosiereinheit 43 umfasst eine Tragstruktur 44, die zumindest mit der Pumpe 13, dem Dosierventil 23 und dem Auswahlventil 24 bestückt ist. An der Tragstruktur 44 ist zweckmäßigerweise die Dosiernadel 12 in abstehender Weise angebracht. Die Dosiereinheit 43 kann innerhalb der Dosiervorrichtung 1 bewegbar sein, um die Dosiernadel 12 variabel im Bereich des jeweiligen Aufnahmebehältnisses 5 positionieren zu können.

An der Dosiereinheit 43 befinden sich zweckmäßigerweise von außen her zugängliche Fluidanschlüsse 41, die dazu dienen, die Verbindung mit der Zuführöffnung 8, der Druckluftquelle P und der Dosiernadel 12 herzustellen.

Gemäß dem illustrierten Ausführungsbeispiel ist die Tragstruktur 44 bevorzugt als ein Kanalkörper 45 ausgebildet, der bevorzugt plattenförmig strukturiert ist. Im Innern des Kanalkörpers 45 ist ein Fluidkanalsystem 46 ausgebildet, das zumindest partiell den Dosierkanal 7 bildet. Exemplarisch ist in dem Kanalkörper 45 abgesehen von zwei Endabschnitten, die im einen Fall die Zuführöffnung 8 und im anderen Fall die Ausgabeöffnung 4 definieren, der gesamte Dosierkanal 7 im Innern des Kanalkörpers 45 ausgebildet. Das Fluidkanalsystem 46 definiert vorzugsweise auch einen Längenabschnitt des Druckluft-Versorgungskanals 33.

Bevorzugt umfasst der Kanalkörper 45 zwei insbesondere plattenförmige Kanalkörperteile 45a, 45b, die in einer Fügeebene 47 aneinander angesetzt und fluiddicht miteinander verbunden sind. Im Bereich dieser Fügeebene 47 erstreckt sich das Fluidkanalsystem 46, wobei die betreffenden Kanäle dadurch gebildet sind, dass in der Fügeebene 47 in eines oder beide Kanalkörperteile 45a, 45b eine Nutenstruktur eingebracht ist, die vom jeweils anderen Kanalkörperteil 45b, 45a überdeckt wird, sodass sich eine kanalförmige Hohlraumstruktur ergibt, die das Fluidkanalsystem 46 zumindest partiell bildet.

Die Realisierung der Tragstruktur 44 als Kanalkörper 45 hat den Vorteil, dass der Verschlauchungs- und Verrohrungsaufwand minimiert ist, was die Herstellungskosten reduziert und kurze Strömungswege ermöglicht.

Die Ausgestaltung der Tragstruktur 44 als Kanalkörper 45 begünstigt auch die Realisierung des Puffer-Kanalabschnittes 27. Dieser hat beispielhaft zumindest partiell einen mäanderförmigen Längsverlauf, sodass sich auf einer geringen Fläche eine relativ große Länge des Puffer-Kanalabschnittes 27 realisieren lässt. Bevorzugt hat der mäanderförmige Abschnitt des Puffer-Kanalabschnittes 27 über seine gesamte Länge einen konstanten Querschnitt.

Anstelle des mäanderförmigen Längsverlaufes kann der Puffer-Kanalabschnitt 47 auch eine Pufferkammer 48 enthalten, die beispielsweise dadurch realisiert ist, dass ein Längenabschnitt des Puffer-Kanalabschnittes 27 einen größeren Querschnitt hat als die sich beidseits daran anschließenden Kanallängenabschnitte. In der Zeichnung ist dies in einem separat abgebildeten strichpunktierten Ausschnitt 52 angedeutet.

Die Dosiervorrichtung 1 kann zur Ausgabe der Fluidprobe mehrphasig und insbesondere zweiphasig betrieben werden. Es ist möglich, die Dosiervorrichtung 1 in einer Pumpen-Dosierphase und daran anschließend in einer Druckluft-Dosierphase zu betreiben. Während der Pumpen-Dosierphase ist das Auswahlventil 24 in die Pumpen-Betriebsstellung geschaltet, während der Druckluft-Dosierphase in die Druckluft-Betriebsstellung.

Bevorzugt kann die Pumpe 13 derart durch die elektronische Steuereinrichtung 15 angesteuert werden, dass sie während der Druckluft-Dosierphase deaktiviert ist.

Die elektronische Steuereinrichtung 15 ist in der Lage, das Auswahlventil 24 und das Dosierventil 23 auf der Grundlage des Vergleichsergebnisses zwischen der vorgegebenen Soll-Fluidmenge und der aktuellen Ist-Fluidmenge anzusteuern und in einer jeweils gewünschten Schaltstellung zu positionieren und zu halten.

Nachstehend wird ein unter Verwendung der Dosiervorrichtung 1 vorteilhaft ausführbares Dosierverfahren zur dosierten Ausgabe eines Fluides beschrieben.

Bei der Durchführung dieses Verfahrens ist die Zuführöffnung 8 so platziert, dass durch sie hindurch eine Fluidabsaugung aus dem in dem Fluidreservoir 2 bereitgestellten Fluid 3 möglich ist. Exemplarisch ist hierzu die Ansaugnadel 11 in das in dem Fluidreservoir 2 bereitgestellte Fluid 3 eingetaucht. Das bereitgestellte Fluid 3 ist nicht druckbeaufschlagt, sondern unterliegt lediglich dem Atmosphärendruck. Insofern ist es nicht einmal erforderlich, das Fluidreservoir 2 zu verschließen, was aus Hygienegründen jedoch gleichwohl zweckmäßig ist.

Bei der Durchführung des Verfahrens ist außerdem die Ausgabeöffnung 4 oberhalb oder innerhalb des Aufnahmebehältnisses 5 platziert, das seinerseits auf der Waage 34a der Fluidmengen-Erfassungseinrichtung 34 steht. An der Ausgabeöffnung 4 gemäß Pfeil 6 austretendes Fluid wird von dem Aufnahmebehältnis 5 aufgefangen und durch die Waage 34a gewogen.

Der Verfahrensablauf wird durch die elektronische Steuereinrichtung 15 gesteuert und koordiniert. Zwar wäre es ohne weiteres auch möglich, die einzelnen Verfahrensabläufe individuell und beispielsweise händisch vorzunehmen, was jedoch im Sinne eines rationellen Verfahrensablaufes wenig empfehlenswert ist. Soweit im Folgenden auf die Vornahme gewisser Verfahrensschritte verwiesen wird, werden diese also zweckmäßigerweise durch die in dem oben erläuterten Sinne angeschlossene elektronische Steuereinrichtung 15 befehligt.

Bei der Durchführung des vorteilhaften Dosierverfahrens wird die Dosiervorrichtung 1 zuerst in einer Pumpen-Dosierphase betrieben, in der das Auswahlventil 24 die Pumpen-Betriebsstellung einnimmt und das Dosierventil 23 die Offenstellung einnimmt. Außerdem ist die Pumpe 13 in dieser Pumpen-Betriebsstellung aktiviert, sodass sie über die Zuführöffnung 8 Fluid 3 aus dem Fluidreservoir 2 ansaugt und das angesaugte Fluid 3 durch den gesamten Dosierkanal 7 hindurchfördert. Bei diesem Pumpen-Fördervorgang wird von der Pumpe 13 angesaugtes Fluid über die Ausgabeöffnung 4 im Rahmen des Fluid-Ausgabevorganges 6 in das Aufnahmebehältnis 5 ausgegeben

Diese Pumpen-Dosierphase wird so lange durchgeführt, bis an der Ausgabeöffnung 4 ein erster Anteil der Soll-Fluidmenge ausgegeben ist, der geringer ist als die Soll-Fluidmenge. Zweckmäßigerweise wird während der Pumpen-Dosierphase ein Großteil der Soll-Fluidmenge ausgegeben, der bevorzugt mehr als die Hälfte und insbesondere auch mehr als Dreiviertel der Soll-Fluidmenge beträgt. Als besonders zweckmäßig hat es sich erwiesen, den ersten Anteil des auszugebenden Fluides auf 80% bis 99,9% und insbesondere auf eine Größenordnung von etwa 90% der Soll-Fluidmenge festzulegen.

Das Ausgeben des ersten Anteils der Soll-Fluidmenge wird mittels der Fluidmengen-Erfassungseinrichtung 34 überwacht. Mittels der elektronischen Speichermittel 37 ist die Menge des ersten Anteils der Soll-Fluidmenge abgespeichert und wird durch die Vergleichermittel 36 laufend mit der aktuell ermittelten Ist-Fluidmenge verglichen. Hat die ausgegebene Fluidmenge den ersten Anteil der auszugebenden Soll-Fluidmenge erreicht, wird die Dosiervorrichtung 1 in eine Druckluft-Dosierphase umgeschaltet.

Diese Druckluft-Dosierphase wird bevorzugt in zwei zeitlich aufeinanderfolgenden ersten und zweiten Teilphasen durchgeführt.

In einer sich unmittelbar an die Pumpen-Dosierphase anschließenden ersten Teilphase der Druckluft-Betriebsstellung ist das Dosierventil 23 in die Schließstellung und das Auswahlventil 24 in die Druckluft-Betriebsstellung umgeschaltet. Aufgrund des somit geschlossenen Dosierventils 23 wird der Fluidausgabevorgang 6 gestoppt. Gleichzeitig wird der Puffer-Kanalabschnitt 27 aus der Druckluftquelle P unter Druck gesetzt und folglich auch das in dem Puffer-Kanalabschnitt eingesperrte Fluid-Puffervolumen.

Während der Druckluft-Dosierphase kann die Pumpe 13 prinzipiell weiterhin aktiv sein, was sich jedoch auf den Fluidausgabevorgang 6 nicht auswirkt, da ihr Pumpenausgang 17 durch das in der Druckluft-Betriebsstellung befindliche Auswahlventil 24 von dem Ausgabe-Kanalabschnitt 26 des Dosierkanals 7 abgetrennt ist. Allein schon aus ökonomischen Gründen und aus Verschleißgründen ist es jedoch zweckmäßig, die Pumpe 13 während der Druckluft-Dosierphase deaktiviert zu halten.

Die Fluidmenge der ersten Teilphase der Druckluft-Dosierphase ist durch die elektronische Steuereinrichtung 15 beispielsweise zeitabhängig vorgegeben, wobei die Zeitdauer insbesondere vom Druck abhängig ist. Beispielsweise kann an den Puffer-Kanalabschnitt 27 ein Drucksensor angeschlossen sein, der mit der elektronischen Steuereinrichtung 15 verbunden ist und der elektronischen Steuereinrichtung 15 meldet, wenn sich in dem Puffer-Kanalabschnitt 27 der durch die Druckluftquelle P bereitgestellte Fluiddruck aufgebaut hat.

Im Anschluss an die erste Teilphase der Druckluft-Dosierphase daran wird eine zweite Teilphase der Druckluft-Dosierphase initiiert. Diese zeichnet sich dadurch aus, dass das Auswahlventil 24 nach wie vor die Druckluft-Betriebsstellung einnimmt, das Dosierventil 23 jedoch getaktet zwischen der Offenstellung und der Schließstellung umgeschaltet wird, sodass eine impulsartige Fluidausgabe an der Ausgabeöffnung 4 stattfindet. Während dieser zweiten Teilphase wird das Fluid quasi tropfenweise an der Ausgabeöffnung 4 unter Überdruck stehend gemäß Pfeil 6 hinausgeschossen.

Da während dieses getakteten Ausgebens sehr kleiner Fluidmengen nach wie vor die Fluidmengen-Erfassungseinrichtung 34 aktiv ist, erfolgt eine sehr genaue Überwachung des Anstieges der ausgegebenen Fluidmenge, sodass der Ausgabevorgang sehr exakt gestoppt werden kann, sobald die ausgegebene Ist-Fluidmenge die angestrebte Soll-Fluidmenge erreicht hat.

Das Stoppen der Fluidausgabe wird dadurch bewirkt, dass das Dosierventil 23 in seiner Schließstellung gehalten wird. Somit kann kein weiteres Fluid aus dem Puffer-Kanalabschnitt 27 nachströmen.

Die zweite Teilphase der Druckluft-Dosierphase dauert also so lange, bis der sich aus der Differenz der Soll-Fluidmenge und des während der Pumpen-Dosierphase ausgegebenen ersten Anteils der auszugebenden Soll-Fluidmenge ergebende restliche Anteil der zu dosierenden Soll-Fluidmenge an der Ausgabeöffnung 4 ausgegeben ist.

Nun kann das Aufnahmebehältnis 5 ausgewechselt und durch ein neues Aufnahmebehältnis 5 ersetzt werden, das mittels eines neuerlichen Ablaufes des geschilderten Dosierverfahrens dann wiederum mit der Soll-Fluidmenge einer Fluidprobe gefüllt wird.

In der Zeichnung nicht illustriert ist eine alternative Ausführungsform, bei der die Möglichkeit besteht, den Puffer-Kanalabschnitt 27 eingangsseitig abzusperren, nachdem er unter Überdruck gesetzt ist. Hierzu kann in den Ausgabe-Kanalabschnitt 26 im Anschluss an das Auswahlventil 24 ein vergleichbar dem Dosierventil 23 ausgebildetes Absperrventil eingeschaltet sein. Alternativ kann das Auswahlventil 24 als ein Dreistellungsventil ausgeführt sein, das eine dritte Schaltstellung ermöglicht, in der der Puffer-Kanalabschnitt 27 sowohl von der Pumpe 13 als auch von der Druckluftquelle P abgetrennt ist. Ebenfalls alternativ kann das Auswahlventil 24 durch zwei gesonderte 2/2-Wegeventile realisiert sein, von denen das eine die Fluidverbindung des Puffer-Kanalabschnittes 27 mit der Druckluftquelle P und das andere die Fluidverbindung des Puffer-Kanalabschnittes 27 mit der Pumpe 13 steuert.

Bei der getakteten Betätigung des Dosierventils 23 während der Druckluft-Dosierphase wird die Öffnungszeitdauer der Offenstellungen des Dosierventils 23 zweckmäßigerweise nach und nach verringert. Dadurch kann man sich äußerst präzise an die auszugebende Soll-Fluidmenge herantasten.

Bevorzugt wird bei der getakteten Betätigung des Dosierventils 23 die Öffnungszeitdauer einer ersten Offenstellung relativ lang gewählt, sodass während dieser ersten Offenstellung bereits ein Großteil des restlichen Anteils an auszugebender Soll-Fluidmenge ausgegeben wird. Während dieser ersten Offenstellung können beispielsweise bereits 50% bis 95% und insbesondere zumindest in etwa 90% des restlichen Anteils der zu dosierenden Soll-Fluidmenge ausgegeben werden. Vorteilhaft ist es, wenn der Puffer-Kanalabschnitt 27 so ausgebildet ist, dass das in ihm maximal aufnehmbare Fluid-Puffervolumen zumindest im Wesentlichen dem getaktet auszugebenden restlichen Anteil der zu dosierenden Soll-Fluidmenge entspricht. Dies hat den Vorteil, dass der Puffer-Kanalabschnitt 27 nach Beendigung eines Dosiervorganges zumindest im Wesentlichen entleert ist.

Die Öffnungszeitdauer der während des getakteten Betätigens des Dosierventils 23 auftretenden Offenstellungen ist zweckmäßigerweise durch die elektronische Steuereinrichtung 15 fest vorgegeben. In ihr sind die Werte für die gewünschten Öffnungszeitdauern abgespeichert.

Bevorzugt erfolgt der getaktete Betrieb des Dosierventils 23 dahingehend, dass die Schließzeitdauer jeder Schließstellung des Dosierventils 23 länger ist als die Öffnungszeitdauer einer jeden Offenstellung, zumindest aber der ersten Offenstellung. Dadurch ergeben sich zwischen den einzelnen Fluidausgabevorgängen längere Ausgabepausen, die eine Beruhigung der in das Aufnahmebehältnis 5 bereits ausgegebenen Ist-Fluidmenge ermöglichen, was sich positiv auf die Erfassungsgenauigkeit auswirkt.

Während die Schließzeitdauer beispielsweise im Bereich zwischen 0,3 Sekunden und 1 Sekunde liegt, liegen die Öffnungszeitdauern zweckmäßigerweise im Bereich zwischen 10 und 100 ms.

Bei dem Dosierventil 23 handelt es sich zweckmäßigerweise um ein sogenanntes mediengetrenntes Ventil, das mit einer Membran als Ventilglied arbeitet, wobei durch die Membran die Betätigungskomponenten von den fluidführenden Bereichen fluiddicht abgetrennt sind. Entsprechendes gilt vorzugsweise auch für das Auswahlventil 24.

Durch das zweiphasige Dosierverfahren mit einer Pumpen-Dosierphase und einer sich daran anschließenden Druckluft-Dosierphase können in kurzer Zeit sehr genaue Dosiervorgänge durchgeführt werden.

## Patentansprüche

1. Verfahren zur dosierten Ausgabe eines Fluides an einer Ausgabeöffnung (4) eines Dosierkanals (7) einer Dosiervorrichtung (1) mit folgenden Verfahrensschritten:
(a) Ausgeben eines ersten Anteils einer auszugebenden Soll-Fluidmenge mittels einer in den Dosierkanal (7) eingeschalteten Pumpe (13),
(b) Beaufschlagen eines der Ausgabeöffnung (4) vorgeschalteten, mit von der Pumpe (13) kommendem Fluid (3) gefüllten Puffer-Kanalabschnittes (27) des Dosierkanals (7) mit Druckluft, sodass der Puffer-Kanalabschnitt (27) einschließlich eines darin eingesperrten Fluid-Puffervolumens unter Druck gesetzt ist, und
(c) anschließend Ausgeben des restlichen Anteils der zu dosierenden Soll-Fluidmenge aus dem durch die Druckluft unter Druck stehenden Puffer-Kanalabschnitt (27), **dadurch gekennzeichnet dass** das zu dosierende Fluid (3) über eine Zuführöffnung (8) des Dosierkanals (7) aus einem Fluidreservoir (2) angesaugt wird, dass das Beaufschlagen mit Druckluft des mit durch die Pumpe (13) angesaugtem Fluid (3) gefüllten Puffer-Kanalabschnittes (27) im sowohl von der Ausgabeöffnung (4) als auch von der Pumpe (13) abgetrennten Zustand des Puffer-Kanalabschnittes (27) erfolgt, und dass das Ausgeben des restlichen Anteils der zu dosierenden Soll-Fluidmenge durch die Druckluft aus dem von der Pumpe (13) abgetrennten Puffer-Kanalabschnitt (27) getaktet erfolgt, mittels eines zwischen dem Puffer-Kanalabschnitt (27) und der Ausgabeöffnung (4) in dem Dosierkanal (7) angeordneten Dosierventils (23), das abwechselnd in eine einen Fluiddurchtritt ermöglichende Offenstellung und in eine einen Fluiddurchtritt verhindernde Schließstellung geschaltet wird, wobei die getaktete Betätigung des Dosierventils (23) nur so lange erfolgt, bis die Soll-Fluidmenge ausgegeben ist und anschließend das Dosierventil (23) in der Schließstellung verbleibt, wobei die an der Ausgabeöffnung (4) tatsächlich ausgegebene Ist-Fluidmenge erfasst und mit der zu dosierenden Soll-Fluidmenge verglichen wird, wobei die getaktete Betätigung des Dosierventils (23) so lange erfolgt, bis die erfasste Ist-Fluidmenge der Soll-Fluidmenge entspricht.

2. Verfahren nach Anspruch 1, **dadurch gekennzeichnet, dass** durch den Betrieb der Pumpe (13) ein Großteil der Soll-Fluidmenge ausgegeben wird, zweckmäßigerweise 80% bis 99,9% und insbesondere 90% der Soll-Fluidmenge, und/oder dass bei der getakteten Betätigung des Dosierventils (23) eine erste Offenstellung eingestellt wird, deren Öffnungszeitdauer länger ist als die Öffnungszeitdauer jeder nachfolgenden Offenstellung, wobei die erste Offenstellung zweckmäßigerweise so eingestellt wird, dass während dieser ersten Offenstellung 50% bis 95% und insbesondere zumindest in etwa 90% des restlichen Anteils der zu dosierenden Soll-Fluidmenge ausgegeben werden.

3. Verfahren nach Anspruch 1 oder 2, **dadurch gekennzeichnet, dass** bei der getakteten Betätigung des Dosierventils (23) die Öffnungszeitdauer der Offenstellungen nach und nach verringert wird, und/oder dass die Schließzeitdauer jeder Schließstellung des Dosierventils (23) länger ist als die Öffnungszeitdauer zumindest jeder sich an die erste Offenstellung anschließenden weiteren Offenstellung und insbesondere jeder Offenstellung.

4. Verfahren nach einem der Ansprüche 1 bis 3, **dadurch gekennzeichnet, dass** der Puffer-Kanalabschnitt (27) so ausgebildet wird, dass das in ihm maximal aufnehmbare Fluid-Puffervolumen zumindest im Wesentlichen dem getaktet auszugebenden restlichen Anteil der zu dosierenden Soll-Fluidmenge entspricht, sodass der Puffer-Kanalabschnitt (27) nach der Beendigung eines Dosiervorganges zumindest im Wesentlichen entleert ist.

5. Verfahren nach einem der Ansprüche 1 bis 4, **dadurch gekennzeichnet, dass** das Verfahren mittels einer Dosiervorrichtung (1) durchgeführt wird, die ein im Verlauf des Dosierkanals (7) zwischen der Pumpe (13) und dem Dosierventil (23) angeordnetes Auswahlventil (24) aufweist, das einen an eine Druckluftquelle (P) angeschlossenen Drucklufteinlass (32) aufweist und wahlweise in eine Pumpen-Betriebsstellung oder in eine Druckluft-Betriebsstellung schaltbar ist, wobei es einen zwischen dem Auswahlventil (24) und der Ausgabeöffnung (4) verlaufenden Ausgabe-Kanalabschnitt (26) des Dosierkanals (7) in der Pumpen-Betriebsstellung mit der Pumpe (13) und in der Druckluft-Betriebsstellung mit dem Drucklufteingang (32) verbindet, wobei folgende Verfahrensschritte durchgeführt werden:
(a) Betreiben der Dosiervorrichtung (1) in einer Pumpen-Dosierphase, in der das Auswahlventil (24) bei laufender Pumpe (13) und bei gleichzeitig in der Offenstellung befindlichem Dosierventil (23) in der Pumpen-Betriebsstellung gehalten wird, bis an der Ausgabeöffnung (4) der erste Anteil der zu dosierenden Soll-Fluidmenge des über die Zuführöffnung (8) angesaugten Fluides (3) ausgegeben ist,
(b) anschließendes Betreiben der Dosiervorrichtung (1) in einer Druckluft-Dosierphase, wobei während einer ersten Teilphase der Druckluft-Dosierphase durch Umschalten des Auswahlventils (24) in die Druckluft-Betriebsstellung und durch Umschalten des Dosierventils (23) in die Schließstellung der während der Pumpen-Dosierphase durch die Pumpe (13) mit Fluid gefüllte Puffer-Kanalabschnitt (27) des Dosierkanals (7) durch Einspeisung von Druckluft unter Druck gesetzt wird und wobei während einer sich daran anschließenden zweiten Teilphase der Druckluft-Dosierphase das Dosierventil (23) getaktet zwischen der Offenstellung und der Schließstellung umgeschaltet wird, bis an der Ausgabeöffnung (4) der restliche Anteil der zu dosierenden Soll-Fluidmenge aus dem Puffer-Kanalabschnitt (27) ausgegeben ist.

6. Dosiervorrichtung zur dosierten Ausgabe eines Fluides, mit einem Dosierkanal (7) für das zu dosierende Fluid (3), der mit einer Ausgabeöffnung (4) verbunden ist, und mit einer Pumpe (13) zum Zuführen von Fluid (3) in den Dosierkanal (7), **dadurch gekennzeichnet,**
- **dass** der Dosierkanal (7) zwischen einer Zuführöffnung (8) und der Ausgabeöffnung (4) verläuft, wobei in seinem Verlauf ein wahlweise in eine einen Fluiddurchtritt ermöglichende Offenstellung oder in eine einen Fluiddurchtritt verhindernde Schließstellung schaltbares Dosierventil (23) angeordnet ist,
- **dass** die Pumpe (13) in dem Dosierkanal (7) zwischen der Zuführöffnung (8) und dem Dosierventil (23) angeordnet ist, wobei im Verlauf des Dosierkanals (7) zwischen der Pumpe (13) und dem Dosierventil (23) ein einen zur Einspeisung von Druckluft vorgesehenen Drucklufteinlass (32) aufweisendes, wahlweise in eine Pumpen-Betriebsstellung oder in eine Druckluft-Betriebsstellung schaltbares Auswahlventil (24) angeordnet ist, das einen zwischen dem Auswahlventil (24) und der Ausgabeöffnung (4) verlaufenden Ausgabe-Kanalabschnitt (26) des Dosierkanals (7) in der Pumpen-Betriebsstellung mit der Pumpe (13) und in der Druckluft-Betriebsstellung mit dem Drucklufteingang (32) verbindet,
- **dass** die Dosiervorrichtung (23) eine zumindest an das Auswahlventil (24) und an das Dosierventil (23) angeschlossene elektronische Steuereinrichtung (15) aufweist, die zur Durchführung des Verfahrens nach einem der Ansprüche 1 bis 6 ausgebildet ist und durch die das Auswahlventil (24) und die Dosiervorrichtung (23) derart ansteuerbar sind, dass
(a) während einer Pumpen-Dosierphase der Dosiervorrichtung (1) bei aktiver Pumpe (13) und gleichzeitig in der Offenstellung befindlichem Dosierventil (23) das Auswahlventil (24) in der Pumpen-Betriebsstellung gehalten ist, bis an der Ausgabeöffnung (4) ein erster Anteil einer zu dosierenden Soll-Fluidmenge eines durch die Pumpe (13) über die Zuführöffnung (8) angesaugten Fluides (3) ausgegeben ist, und
(b) im Anschluss an die Pumpen-Dosierphase eine Druckluft-Dosierphase der Dosiervorrichtung (1) hervorgerufen wird, in der während einer ersten Teilphase durch Umschalten des Auswahlventils (24) in die Druckluft-Betriebsstellung und durch Umschalten des Dosierventils (23) in die Schließstellung ein zwischen dem Auswahlventil (24) und dem Dosierventil (23) befindlicher, während der Pumpen-Dosierphase durch die Pumpe (13) mit Fluid gefüllter Puffer-Kanalabschnitt (27) des Dosierkanals (7) durch Einspeisung von Druckluft unabhängig von der Pumpe (13) unter Druck gesetzt wird und in der während einer anschließenden zweiten Teilphase das Dosierventil (23) getaktet nur so lange zwischen der Offenstellung und der Schließstellung umgeschaltet wird, bis an der Ausgabeöffnung (4) der restliche Anteil der zu dosierenden Soll-Fluidmenge aus dem Puffer-Kanalabschnitt (27) ausgegeben ist, worauf das Dosierventil (23) in der Schließstellung verbleibt,
- und **dass** die Dosiervorrichtung (23) eine Fluidmengen-Erfassungseinrichtung (34) zur Erfassung der an der Ausgabeöffnung (4) tatsächlich ausgegebenen Ist-Fluidmenge aufweist, die an die elektronische Steuereinrichtung (15) angeschlossen ist und ausgebildet ist, um der elektronischen Steuereinrichtung (15) Informationen über die ausgegebene Ist-Fluidmenge zu geben, wobei das Auswahlventil (24) und das Dosierventil (23) auf der Grundlage der Soll-Fluidmenge und der durch die Fluidmengen-Erfassungseinrichtung (34) bereitgestellten Informationen über die Ist-Fluidmenge durch die elektronische Steuereinrichtung (15) betriebsmäßig ansteuerbar sind, wobei auch die Pumpe (13) an die elektronische Steuereinrichtung (15) angeschlossen und durch die elektronische Steuereinrichtung (15) betriebsmäßig ansteuerbar ist, wobei die Pumpe (13) während der Druckluft-Dosierphase durch die elektronische Steuereinrichtung (15) deaktivierbar ist.

7. Dosiervorrichtung nach Anspruch 6, **dadurch gekennzeichnet, dass** sie ein mit dem zu dosierenden Fluid (3) befüllbares oder befülltes, zweckmäßigerweise nicht druckbeaufschlagtes Fluidreservoir (2) aufweist, an das der Dosierkanal (7) mit der Zuführöffnung (8) angeschlossen ist.

8. Dosiervorrichtung nach Anspruch 7, **dadurch gekennzeichnet, dass** die elektronische Steuereinrichtung (15) elektronische Vergleichermittel (36) zum Vergleichen der empfangenen Informationen über die Ist-Fluidmenge mit der Soll-Fluidmenge aufweist und ausgebildet ist, um die getaktete Betätigung des Dosierventils (23) zu beenden und das Dosierventil (23) in seiner Schließstellung zu halten, wenn die erfasste Ist-Fluidmenge der Soll-Fluidmenge entspricht.

9. Dosiervorrichtung nach Anspruch 6 bis 8, **dadurch gekennzeichnet, dass** das Auswahlventil (24) ein elektrisch betätigbares 3/2-Wegeventil und das Dosierventil (23) ein elektrisch betätigbares 2/2-Wegeventil ist.

10. Dosiervorrichtung nach einem der Ansprüche 6 bis 9, **dadurch gekennzeichnet, dass** sie einen zweckmäßigerweise plattenförmig ausgebildeten Kanalkörper (45) aufweist, in dem ein Längenabschnitt des Dosierkanals (7), insbesondere einschließlich des Puffer-Kanalabschnittes (27), ausgebildet ist und der mit der Pumpe (13), dem Auswahlventil (24) und dem Dosierventil (23) bestückt ist, wobei der Puffer-Kanalabschnitt (27) zweckmäßigerweise zumindest partiell einen mäanderförmigen Längsverlauf hat oder eine Pufferkammer (48) definiert, und wobei zweckmäßigerweise die Ausgabeöffnung (4) Bestandteil einer an dem Kanalkörper (45) befestigten Dosiernadel (12) ist.

## Claims

1. Method for dispensed output of a fluid at an output opening (4) of a dispensing channel (7) of a dispensing device (1), with the following method steps:
(a) outputting a first proportion of a target fluid amount to be output by means of a pump (13) connected into the dispensing channel (7),
(b) applying pressurised air to a buffer channel portion (27) of the dispensing channel (7) provided upstream of the output opening (4), which buffer channel portion is filled with fluid (3) coming from the pump (13), such that the buffer channel portion (27) including a fluid buffer volume confined therein is placed under pressure, and
(c) subsequently outputting the remaining proportion of the target fluid amount to be dispensed from the buffer channel portion (27) which is pressurised by the pressurised air,
**characterized in,**
**that** the fluid (3) to be dispensed is sucked via a supply opening (8) of the dispensing channel (7) from a fluid reservoir (2),
**that** the application of pressurised air to the buffer channel portion (27), which is filled with fluid (3) sucked by the pump (13), takes place in a condition where the buffer channel portion (27) is separated both from the output opening (4) and from the pump (13),
and **that** the outputting of the remaining proportion of the target fluid amount to be dispensed by the pressurised air takes place from the buffer channel portion (27), which is separated from the pump (13), in a clocked manner by means of a dispensing valve (23) arranged in the dispensing channel (7) between the buffer channel portion (27) and the output opening (4), which dispensing valve is switched alternately into an open position allowing a fluid passage and into a closed position preventing a fluid passage, wherein the actuation in a clocked manner of the dispensing valve (23) only takes place until the target fluid amount is output and subsequently the dispensing valve (23) remains in the closed position, wherein the actual fluid amount actually output at the output opening (4) is detected and is compared with the target fluid amount to be dispensed, wherein the clocked actuation of the dispensing valve (23) takes place for as long as the detected actual fluid amount corresponds to the target fluid amount.

2. Method according to claim 1, **characterised in that** the majority of the target fluid amount is output by the operation of the pump (13), expediently 80% to 99.9% and in particular 90% of the target fluid amount, and/or that a first open position is set in the case of the clocked actuation of the dispensing valve (23), the opening duration of which is longer than the opening duration of each subsequent open position, the first open position expediently being set such that during this first open position, 50% to 95%, and in particular at least roughly 90%, of the remaining proportion of the target fluid amount to be dispensed is output.

3. Method according to claim 1 or 2, **characterised in that** the opening duration of the open positions in the case of the clocked actuation of the dispensing valve (23) is gradually reduced, and/or that the closure duration of each closed position of the dispensing valve (23) is longer than the opening duration of at least each further open position following the first open position and in particular of each open position.

4. Method according to any of claims 1 to 3, **characterised in that** the buffer channel portion (27) is designed such that the fluid buffer volume at most receivable in the said buffer channel portion at least substantially corresponds to the remaining proportion of the target fluid amount to be dispensed that is to be output in a clocked manner such that the buffer channel portion (27) is at least substantially emptied after a dispensing operation ends.

5. Method according to any of claims 1 to 4, **characterised in that** the method is carried out by means of a dispensing device (1) which has a selection valve (24) arranged in the course of the dispensing channel (7) between the pump (13) and the dispensing valve (23), which selection valve has a pressurised air inlet (32) connected to a pressurised air source (P) and is selectively switchable into a pump operating position or into a pressurised air operating position, said selection valve connecting a output channel portion (26) of the dispensing channel (7) extending between the selection valve (24) and the output opening (4) to the pump (13) in the pump operating position and to the pressurised air inlet (32) in the pressurised air operating position, the following method steps being carried out:
(a) operating the dispensing device (1) in a pump dispensing phase in which the selection valve (24) is held in the pump operating position when the pump (13) is running and the dispensing valve (23) is in the open position at the same time until the first proportion of the target fluid amount to be dispensed of the fluid (3) sucked via the supply opening (8) is output at the output opening (4),
(b) subsequently operating the dispensing device (1) in a pressurised air dispensing phase, wherein during a first sub-phase of the pressurised air dispensing phase by switching over the selection valve (24) to the pressurised air operating position and by switching over the dispensing valve (23) to the closed position the buffer channel portion (27) of the dispensing channel (7) which is filled with fluid by the pump (13) during the pump dispensing phase being placed under pressure by feeding in pressurised air, and wherein during a second sub-phase of the pressurised air dispensing phase subsequent thereto the dispensing valve (23) being switched over in a clocked manner between the open position and the closed position until the remaining proportion of the target fluid amount to be dispensed is output from the buffer channel portion (27) at the output opening (4).

6. Dispensing device for the dispensed output of a fluid, having a dispensing channel (7) for the fluid (3) to be dispensed, which is connected with an output opening (4), and having a pump (13) to supply fluid (3) into the dispensing channel (7), **characterised in**
- **that** the dispensing channel (7) extends between a supply opening (8) and the output opening (4), wherein in the course of the dispensing channel is arranged a dispensing valve (23) which is selectively switchable into an open position allowing a fluid passage and into a closed position preventing a fluid passage,
- **that** the pump (13) is arranged in the dispensing channel (7) between the supply opening (8) and the dispensing valve (23), wherein a selection valve (24) which is selectively switchable into a pump operating position or into a pressurised air operating position and having a pressurised air inlet (32) provided to feed in pressurised air is arranged in the course of the dispensing channel (7), which selection valve connects an output channel portion (26) of the dispensing channel (7) extending between the selection valve (24) and the output opening (4) in the pump operating position to the pump (13), and in the pressurised air operating position to the pressurised air inlet (32),
- **that** the dispensing device (23) has an electronic control device (15) connected at least to the selection valve (24) and to the dispensing valve (23), which is designed to carry out the method according to any of claims 1 to 6 and by means of which control device the selection valve (24) and the dispensing device (23) are actuatable such that
(a) the selection valve (24) is held in the pump operating position during a pump dispensing phase of the dispensing device (1) when the pump (13) is active and the dispensing valve (23) is in the open position at the same time until a first proportion of a target fluid amount, to be dispensed, of a fluid (3) sucked by the pump (13) via the supply opening (8) is output at the output opening (4), and
(b) following the pump dispensing phase, a pressurised air dispensing phase of the dispensing device (1) is triggered in which a buffer channel portion (27) of the dispensing channel (7) which is filled with fluid by the pump (13) during the pump dispensing phase and located between the selection valve (24) and the dispensing valve (23) is placed under pressure by feeding in pressurised air independently of the pump (13) during a first sub-phase by switching over the selection valve (24) into the pressurised air operating position and by switching over the dispensing valve (23) into the closed position, and in which the dispensing valve (23) is switched over in a clocked manner between the open position and the closed position during a subsequent second sub-phase only until the remaining proportion of the target fluid amount to be dispensed is output from the buffer channel portion (27) at the output opening (4), whereupon the dispensing valve (23) remains in the closed position,
- and **that** the dispensing device (23) has a fluid amount detection device (34) to detect the actual fluid amount actually output at the output opening (4), which fluid amount detection device is connected to the electronic control device (15) and is designed to provide to the electronic control device (15) information concerning the actual fluid amount output, the selection valve (24) and the dispensing valve (23) being operationally controllable by the electronic control device (15) based on the target fluid amount and the information provided by the fluid amount detection device (34) concerning the actual fluid amount, wherein the pump (13) is also connected to the electronic control device (15) and is operationally controllable by the electronic control device (15), the pump (13) being deactivatable during the pressurised air dispensing phase by the electronic control device (15).

7. Dispensing device according to claim 6, **characterised in that** it has a fluid reservoir (2) to which pressure is expediently not applied and which is fillable or filled with the fluid (3) to be dispensed, to which reservoir the dispensing channel (7) is connected at the supply opening (8).

8. Dispensing device according to claim 7, **characterised in that** the electronic control device (15) has electronic comparison means (36) to compare the received information concerning the actual fluid amount with the target fluid amount and is designed to end the clocked actuation of the dispensing valve (23) and to hold the dispensing valve (23) in the closed position thereof when the detected actual fluid amount corresponds to the target fluid amount.

9. Dispensing device according to claim 6 to 8, **characterised in that** the selection valve (24) is an electrically actuatable 3/2-way valve, and the dispensing valve (23) is an electrically actuatable 2/2-way valve.

10. Dispensing device according to any of claims 6 to 9, **characterised in that** it has an expediently plate-shaped channel body (45) in which a longitudinal portion of the dispensing channel (7), in particular including the buffer channel portion (27), is formed and which is fitted with the pump (13), the selection valve (24) and the dispensing valve (23), the buffer channel portion (27) expediently having at least partially a meandering-shaped longitudinal course or defining a buffer chamber (48), and wherein expediently the output opening (4) is part of a dispensing needle (12) which is fastened to the channel body (45).

## Revendications

1. Procédé de distribution dosée d'un fluide au niveau d'une ouverture de distribution (4) d'un canal de dosage (7) d'un dispositif de dosage (1), avec des étapes de procédé suivantes :
(a) distribution d'une première fraction d'une quantité de fluide théorique à distribuer au moyen d'une pompe (13) intercalée dans le canal de dosage (7),
(b) soumission d'un tronçon de canal tampon (27), installé en amont de l'ouverture de distribution (4), rempli de fluide (3) provenant de la pompe (13), du canal de dosage (7) à l'action d'air comprimé de sorte que le tronçon de canal tampon (27) y compris un volume tampon de fluide bloqué dans celui-ci est mis sous pression, et
(c) puis distribution de la fraction restante de la quantité de fluide théorique à doser depuis le tronçon de canal tampon (27) mis sous pression par l'air comprimé,
**caractérisé en ce**
**que** le fluide (3) à doser est aspiré hors du réservoir de fluide (2) par l'intermédiaire d'une ouverture d'amenée (8) du canal de dosage (7),
**que** la soumission du tronçon de canal tampon (27) rempli de fluide (3) aspiré par la pompe (13) à l'action de l'air comprimé est effectuée dans l'état du tronçon de canal tampon (27) séparé à la fois de l'ouverture de distribution (4) et de la pompe (13),
et **que** la distribution de la fraction restante de la quantité de fluide théorique à doser est effectuée de manière cadencée par l'air comprimé provenant du tronçon de canal tampon (27) séparé de la pompe (13),
au moyen d'une soupape de dosage (23) disposée entre le tronçon de canal tampon (27) et l'ouverture de distribution (4) dans le canal de dosage (7), qui est montée en alternance dans une position ouverte permettant un passage de fluide et dans une position fermée empêchant un passage de fluide, dans lequel l'actionnement cadencé de la soupape de dosage (23) est effectué seulement tant que la quantité de fluide théorique est distribuée puis que la soupape de dosage (23) reste dans la position fermée, dans lequel la quantité de fluide réelle distribuée dans les faits au niveau de l'ouverture de distribution (4) est détectée et est comparée à la quantité de fluide théorique à doser, dans lequel l'actionnement cadencé de la soupape de dosage (23) est effectué tant que la quantité de fluide réelle détectée correspond à la quantité de fluide théorique.

2. Procédé selon la revendication 1, **caractérisé en ce qu'**une majeure partie de la quantité de fluide théorique est distribuée par le fonctionnement de la pompe (13), de manière opportune 80 % à 99,9 % et en particulier 90 % de la quantité de fluide théorique, et/ou que lors de l'actionnement cadencé de la soupape de dosage (23), une première position ouverte est réglée, dont la durée d'ouverture est plus longue que la durée d'ouverture de chaque position ouverte suivante, dans lequel la première position ouverte est réglée de manière opportune de telle sorte que pendant ladite première position ouverte 50 % à 95 % et en particulier au moins environ 90 % de la fraction restante de la quantité de fluide théorique à doser sont distribués.

3. Procédé selon la revendication 1 ou 2, **caractérisé en ce que** lors de l'actionnement cadencé de la soupape de dosage (23), la durée d'ouverture des positions ouvertes est progressivement réduite, et/ou la durée de fermeture de chaque position fermée de la soupape de dosage (23) est plus longue que la durée d'ouverture d'au moins chaque autre position ouverte située à la suite immédiate de la première position ouverte et en particulier de chaque position ouverte.

4. Procédé selon l'une quelconque des revendications précédentes 1 à 3, **caractérisé en ce que** le tronçon de canal tampon (27) est réalisé de telle sorte que le volume tampon de fluide pouvant être reçu dans celui-ci au maximum correspond au moins sensiblement à la fraction restante à distribuer de manière cadencée de la quantité de fluide théorique à doser, de sorte que le tronçon de canal tampon (27) est vidé au moins sensiblement à la fin de l'opération de dosage.

5. Procédé selon l'une quelconque des revendications 1 à 4, **caractérisé en ce que** le procédé est mis en oeuvre au moyen d'un dispositif de dosage (1), qui présente une soupape de sélection (24) disposée le long du canal de dosage (7) entre la pompe (13) et la soupape de dosage (23), qui présente une entrée d'air comprimé (32) raccordée à une source d'air comprimé (P) et peut être commutée au choix dans une position de fonctionnement de pompe ou dans une position de fonctionnement à air comprimé, dans lequel elle relie un tronçon de canal de distribution (26), s'étendant entre la soupape de sélection (24) et l'ouverture de distribution (4), du canal de dosage (7) dans la position de fonctionnement de pompe à la pompe (13) et dans la position de fonctionnement à air comprimé à l'entrée d'air comprimé (32), dans lequel des étapes de procédé suivantes sont mises en oeuvre :
(a) le fonctionnement du dispositif de dosage (1) dans une phase de dosage de pompe, dans laquelle la soupape de sélection (24) est maintenue lorsque la pompe (13) fonctionne et lorsque la soupape de dosage (23) se trouve simultanément dans la position ouverte dans la position de fonctionnement de pompe jusqu'à ce que la première fraction de la quantité de fluide théorique à doser du fluide (3) aspiré par l'intermédiaire de l'ouverture d'amenée (8) soit distribuée au niveau de l'ouverture de distribution (4),
(b) puis le fonctionnement du dispositif de dosage (1) dans une phase de dosage d'air comprimé, dans lequel pendant une première phase partielle de la phase de dosage d'air comprimé, le tronçon de canal tampon (27), rempli de fluide par la pompe (13) pendant la phase de dosage de pompe, du canal de dosage (7) est mis sous pression par injection d'air comprimé par la commutation de la soupape de sélection (24) dans la position de fonctionnement d'air comprimé et par la commutation de la soupape de dosage (23) dans la position fermée et dans lequel pendant une deuxième phase partielle située immédiatement après la phase de dosage d'air comprimé, la soupape de dosage (23) est commutée de manière cadencée entre la position ouverte et la position fermée jusqu'à ce que la fraction restante de la quantité de fluide théorique à doser provenant du tronçon de canal tampon (27) soit distribuée au niveau de l'ouverture de distribution (4).

6. Dispositif de dosage pour la distribution dosée d'un fluide, avec un canal de dosage (7) pour le fluide (3) à doser, qui est relié à une ouverture de distribution (4), et avec une pompe (13) pour amener du fluide (3) dans le canal de dosage (7), **caractérisé en ce**
- **que** le canal de dosage (7) s'étend entre une ouverture d'amenée (8) et l'ouverture de distribution (4), dans lequel est disposée sur son extension une soupape de dosage (23) pouvant commuter au choix dans une position ouverte permettant un passage de fluide ou dans une position fermée empêchant un passage de fluide,
- **que** la pompe (13) est disposée dans le canal de dosage (7) entre l'ouverture d'amenée (8) et la soupape de dosage (23), dans lequel est disposée sur l'extension du canal de dosage (7), entre la pompe (13) et la soupape de dosage (23), une soupape de sélection (24) présentant une entrée d'air comprimé (32) prévue pour injecter de l'air comprimé, pouvant commuter au choix dans une position de fonctionnement de pompe ou dans une position de fonctionnement à air comprimé, qui relie un tronçon de canal de distribution (26), s'étendant entre la soupape de sélection (24) et l'ouverture de distribution (4), du canal de dosage (7) à la pompe (13) dans la position de fonctionnement de pompe et à l'entrée d'air comprimé (32) dans la position de fonctionnement à air comprimé,
- **que** le dispositif de dosage (23) présente un système de commande (15) électronique raccordé au moins à la soupape de sélection (24) et à la soupape de dosage (23), qui est réalisé pour mettre en oeuvre le procédé selon l'une quelconque des revendications 1 à 6 et par lequel la soupape de sélection (24) et le dispositif de dosage (23) peuvent être pilotés de telle manière que
(a) pendant une phase de dosage de pompe du dispositif de dosage (1), lorsque la pompe (13) est active et lorsque simultanément la soupape de dosage (23) se trouve dans la position ouverte, la soupape de sélection (24) est maintenue dans la position de fonctionnement de pompe jusqu'à ce qu'une première fraction d'une quantité de fluide théorique à doser d'un fluide (3) aspiré par la pompe (13) par l'intermédiaire de l'ouverture d'amenée (8) soit distribuée au niveau de l'ouverture de distribution (4), et
(b) directement après la phase de dosage de pompe, une phase de dosage d'air comprimé du dispositif de dosage (1) est provoquée, dans laquelle un tronçon de canal tampon (27), se trouvant entre la soupape de sélection (24) et la soupape de dosage (23), rempli de fluide par la pompe (13) pendant la phase de dosage de pompe, du canal de dosage (7) est mis sous pression indépendamment de la pompe (13) par l'injection d'air comprimé pendant une première phase partielle par la commutation de la soupape de sélection (24) dans la position de fonctionnement à air comprimé et par la commutation de la soupape de dosage (23) dans la position fermée et dans laquelle pendant une deuxième phase partielle suivant immédiatement après, la soupape de dosage (23) est commutée de manière cadencée seulement entre la position ouverte et la position fermée jusqu'à ce que la fraction restante de la quantité de fluide théorique à doser provenant du tronçon de canal tampon (27) soit distribuée au niveau de l'ouverture de distribution (4), ce après quoi la soupape de dosage (23) reste dans la position fermée,
- et **que** le dispositif de dosage (23) présente un système de détection de quantités de fluide (34) pour détecter la quantité de fluide réelle distribuée dans les faits au niveau de l'ouverture de distribution (4), qui est raccordé au système de commande (15) électronique et est réalisé afin de fournir au système de commande (15) électronique des informations sur la quantité de fluide réelle distribuée, dans lequel la soupape de sélection (24) et la soupape de dosage (23) peuvent être pilotées de manière opérationnelle par le système de commande (15) électronique sur la base de la quantité de fluide théorique et des informations sur la quantité de fluide réelle fournies par le système de détection de quantités de fluide (34), dans lequel également la pompe (13) est raccordée au système de commande (15) électronique et peut être pilotée de manière opérationnelle par le système de commande (15) électronique, dans lequel la pompe (13) peut être désactivée pendant la phase de dosage d'air comprimé par le système de commande (15) électronique.

7. Dispositif de dosage selon la revendication 6, **caractérisé en ce qu'**il présente un réservoir de fluide (2) rempli ou pouvant être rempli avec le fluide (3) à doser, n'étant pas soumis de manière opportune à l'action d'une pression, auquel le canal de dosage (7) est raccordé par l'ouverture d'amenée (8).

8. Dispositif de dosage selon la revendication 7, **caractérisé en ce que** le système de commande (15) électronique présente des moyens de comparaison (36) électroniques pour comparer les informations reçues sur la quantité de fluide réelle à la quantité de fluide théorique et est réalisé pour mettre fin à l'actionnement cadencé de la soupape de dosage (23) et pour maintenir la soupape de dosage (23) dans sa position fermée quand la quantité de fluide réelle détectée correspond à la quantité de fluide théorique.

9. Dispositif de dosage selon la revendication 6 à 8, **caractérisé en ce que** la soupape de sélection (24) est une soupape de distribution à 3/2 voies pouvant être actionnée de manière électrique et la soupape de dosage (23) est une soupape de distribution à 2/2 voies pouvant être actionnée de manière électrique.

10. Dispositif de dosage selon l'une quelconque des revendications 6 à 9, **caractérisé en ce qu'**il présente un corps de canal (45) réalisé de manière opportune en forme de plaque, dans lequel un tronçon longitudinal du canal de dosage (7), en particulier y compris le tronçon de canal tampon (27) est réalisé et qui est équipé de la pompe (13), de la soupape de sélection (24) et de la soupape de dosage (23), dans lequel le tronçon de canal tampon (27) a une extension longitudinale de manière opportune au moins en partie en forme de méandre ou définit une chambre tampon (48), et dans lequel de manière opportune l'ouverture de distribution (4) fait partie intégrante d'une aiguille de dosage (12) fixée au niveau du corps de canal (45).
